# EUROPEAN PATENT SPECIFICATION

(11) **EP 2 915 567 B1**
(45) Date of publication and mention of the grant of the patent: **21.09.2016**
(21) Application number: 14195127.7
(22) Date of filing: 27.11.2014
(51) Int. Cl.: A63H 3/00, A63H 3/28, A63H 30/04, A63F 13/355, A63F 13/215

(54) **Method and device for controlling doll with app and operating the interactive doll**
Verfahren und Vorrichtung zur Steuerung einer Puppe mit einer App und zum Betreiben der interaktiven Puppe
Procédé et dispositif de commande de poupée avec une application et d'exploitation de la poupée interactive

(30) Priority: 07.03.2014 TW 103107940; 19.06.2014 TW 103121117
(43) Date of publication of application: 09.09.2015
(73) Proprietor: Mooredoll Inc., Taipei City 104 (TW)
(72) Inventor: Kuo, Liu-Ken, Keelung City 200 (TW)
(74) Representative: Michalski Hüttermann & Partner Patentanwälte mbB

(56) References cited:
- WO-A1-01/12285
- CN-Y- 201 375 814
- US-A1- 2004 053 696
- US-A1- 2011 021 109
- US-A1- 2014 038 489

## Description

### BACKGROUND OF THE INVENTION

### 1. Field of the Invention

The present invention relates to a method and a device for controlling doll with APP, in particular respect to a method and a device for setting wireless network connection of a doll, enabling the doll to connect to a cloud server to access a voice message with APP; the present invention relates to a method and a device for operating an interactive doll, in particular respect to a method and a device using a sensing module of a doll to detect operating state of the doll so as to conduct interaction with the interactive application.

### 2. Description of the Related Art

A device for controlling an interactive electronic plush toy comprising a WiFi module is known from the prior art, for example from US 2014/0038489 A1. Currently, a variety of smartphones, tablet computers, Internet access and other features of the device have been weeding through the old to bring forth the new in the market conditions, and share of smart devices has been rising which have almost become an indispensable part of people's live. Additionally, with the burgeoning development of various applications (APP), functions of these smart devices are upgraded greatly, in particular the application of a variety of communications has dramatically changed in the past way to communicate and deliver messages.

In terms of these smart devices, ways of sending messages to each other has become quite common, but as to these children without the devices, it must to find another way to convey the message by taking advantage of objectives aside the children; as far as the toy, such as doll, is concerned, the current doll with a recording function can play a desired message in advance via the doll by using prerecord function. However, if the doll is lacking in transmission connection, the parents who are away from home are incapable of recording message and then sending it to the doll in time; moreover, as the doll with recording function requires power supply along with the complexity of the interface's operations; obviously, obstacles to usage become inevitable.

Most of the various commercially available dolls are designed as famous cartoon features or diverse models to attract consumer's attention, and generally, as far as the children and parent are concerned, their choices are nothing more than shape, material, price and so on and so forth, the containing functions are of less concerns; but as to the growing children, it is of high possibility that they may spend much time with dolls, and if dolls are able to be designed with certain different functions, such as voice recording and playing, it not only enhances the interest of the dolls, but also promotes the parent-child interaction, as well as the parent-child relation. The current dolls mostly belong to those with the kind of function.

For the sake of adding certain special functions, it is inevitable to embed some electronic devices to accomplish the purpose, but as what is said, children spend much time with dolls; consequently, problems concerning interface design and power consumption of the electronic devices become one of the considered factors towards the consumers. As a result, how to enable the user operating the doll by the easiest way and conducting the related interaction is the primary purpose which the present invention desires to achieve.

Therefore, the present invention provides a method and a device for controlling the doll with APP without using complicated setting procedures, nor worries frequent replacement for battery; it can control and set the doll by only using the APP installed in smart device and can thereby send messages to the connected doll on the go by the APP so as to play the to-be-sent message and further improve the preceding shortcomings. In the meanwhile, the present invention provides a method and a device for operating the interactive doll, and by detecting the operating state of the doll via the sensing device embedded in the doll, it can interact or respond to the interactive application so that the user is able to easily operate certain interactive applications by the doll to achieve to the preceding purposes.

### SUMMARY OF THE INVENTION

In view of the shortcoming of the aforementioned conventional art, one objective of the present invention is to provide a method and a device for controlling doll with application (APP) to resolve the known doll of not easy to connect to wireless network along with not being able to play voice message in real time. By using the APP to connect with the doll, it enables the doll accessing information stored in network cloud server and to play so as to achieve function of controlling easily. In addition, purpose of the present invention is also to provide a method and a device for operating the interactive doll, serving the doll as a platform for operating an interactive application. Although the doll is unlike the common electronic devices which are embedded input interface, using the built-in sensing device of the doll to detect the operating state of the doll not only enables the doll connecting with cloud server to access and play contents of the interactive application, but also responds to the operating actions of the doll so as further to promote the interactive communication function of these interactive applications such as education learning or game applications. As a result, the user is able to conduct the related interaction under the easy and interesting circumstances to enhance the usage effect of the interactive doll.

According to one purpose of the present invention, it provides a method for controlling the doll with application (APP) which may comprise connecting to a doll by a wireless network module of a handheld device, and setting an Internet of Things (IoT) WiFi module assembled in the doll to connect to a wireless network access point (AP) by the APP installed in the handheld device; sending a voice message to a cloud server by the APP of the handheld device; and connecting to the cloud server to access the voice message by the wireless network AP connected to the doll, and playing the voice message by a speaker module assembled within the doll.

Preferably, the handheld device may search and accordingly connect to the doll by a service set identifier (SSID) and a password provided by the APP.

Preferably, the handheld device may comprises a broadcast packet of the wireless network AP setting information and the doll may receive and accordingly read the broadcast packet so as to complete the setting of connecting with the wireless network AP.

Preferably, the APP may set a service set identifier (SSID) and a password of the handheld device to provide the IoT WiFi module of the doll for a match and to connect to the handheld device.

Preferably, the doll may control the speaker module to play the voice message by a press button.

Preferably, the doll may detect a motion condition of the doll by an acceleration sensor, and the voice message may be set to play automatically by the APP when the motion condition is detected.

Preferably, the method for controlling the doll with APP may further comprise: recording a response message by a recording module assembled within the doll, and the response message being sent back to the cloud server via the wireless network AP.

Preferably, the method for controlling the doll with APP may further comprise: shooting an image by a camera module assembled within the doll and sending the image to the cloud server via the wireless network AP.

According to other purpose of the present invention, it provides method for operating an interactive doll which may comprise: connecting to a doll by a wireless network module of a handheld device, and setting an IoT WiFi module assembled in the doll by the handheld device to enable the doll connecting to a wireless network AP; connecting the doll to a cloud server by connecting to the wireless network AP to access an interactive application of the cloud server; and playing a content message of the interactive application by a speaker module assembled within the doll, and detecting operating state of the doll by a sensing module assembled within the doll to generate a response message, sending the response message back to the interactive application, and the interactive application generating a corresponding interactive message to conducting interacting according to the different response messages.

Preferably, the sensing module assembled within the doll may detect changes of position and direction of the doll by an acceleration sensor and a gyroscope sensor that leads operation action of the changes of position and direction of the doll transforming into the response message and being sent back to the interactive application.

Preferably, the method for operating the interactive doll may further record a response voice message by a recording module assembled within the doll, the response voice message being sent back to the interactive application, and the interactive application recognizing the response message represented as the response message to generate the corresponding interactive message to conduct interacting.

Preferably, the method for operating the interactive doll may further connect to the cloud server and download the interactive application by the handheld device, a voice message being sent to the doll by the handheld device, and the doll playing the voice message by the speaker module according to setting of the operating state.

Preferably, the method for operating the interactive doll may further connect to the cloud server and download the interactive application by the handheld device, the interactive application displaying an interactive picture of the interactive application by the handheld device or a display device connected to the handheld device.

Preferably, the method for operating the interactive doll may further comprise connecting to the doll by the wireless network module of the handheld device, receiving the response message and replacing a sensing message detected by the original sensing device of the handheld device, and manipulating an application installed within the handheld device by the doll.

According to one more purpose of the present invention, it provides device for controlling and operating a doll which may comprise: a doll having a microcontroller comprising an IoT WiFi module, a speaker module and a sensing module connected to the microcontroller, respectively; and a handheld device setting a wireless network module and installing an application to set the IoT WiFi module of the doll connecting to a wireless network AP; wherein, the handheld device sends a voice message to a cloud server by the application, and the doll accesses the voice message by a connection between the wireless network AP and the cloud server, and plays the voice message by the speaker module.

Preferably, the doll may comprise an indicator connected to the microcontroller, and being used as a reminder while receiving a new message.

Preferably, the doll may comprise a recording module connected to the microcontroller, and being used to record a response message and sent back to the cloud server.

Preferably, the cloud server may further comprise an interactive application, the doll accesses the interactive application by a connection between the wireless network AP and the cloud server; wherein the doll may play a content message of the interactive application by the speaker module, and generates a response message by operating state detected by the sensing module and accordingly sends back to the interactive application so that the interactive application generates a corresponding interactive message to conduct interacting.

Preferably, the sensing module may comprise an acceleration sensor and a gyroscope sensor detecting changes of position and direction of the doll that leads operation action of the changes of position and direction of the doll transforming into the response message and being sent back to the interactive application.

Preferably, it may further comprise a display device connected to the handheld device and displaying an interactive picture of the interactive application.

According to the aforementioned description, a method and device for controlling the doll with APP and operating the interactive doll of the present invention may have one or more advantages as follows:
(1) The method and device for controlling the doll with APP and operating the interactive doll are set to enable user sending voice message on the go and enables the doll accessing and playing the voice message by connecting with a cloud server so as to reach the function of real time message delivery.
(2) The method and device for controlling the doll with APP and operating the interactive doll are set to use the APP to set the doll to connect with wireless network AP so as to reduce setting of the doll itself and promote the convenience to usage.
(3) The method and device for controlling the doll with APP and operating the interactive doll are set to integrate each module of the doll into a microcontroller and enable the doll having a longer service life without replacing battery frequently by a power saving mechanism.
(4) The method and device for controlling the doll with APP and operating the interactive doll are set to enable the user conducting interacting with the interactive application by the doll, and to operate the interactive application with easy and interest ways without adding extra operating devices and interfaces.
(5) The method and device for controlling the doll with APP and operating the interactive doll are set to download the interactive application by the handheld device and to send messages to the doll to conduct interacting by the handheld device so that the user is able to use the handheld device to interact with the doll to promote the diversity of the interactive function.
(6) The method and device for controlling the doll with APP and operating the interactive doll are set to display the interactive application image by the handheld device or the display device connected with the handheld device so as to directly demonstrate the interactive contents.

### BRIEF DESCRIPTION OF THE DRAWINGS

FIG. 1 is a flow chart of a method for controlling the doll with APP of the present invention.
FIG. 2 is a schematic diagram of a method for controlling the doll with APP and operating the interactive doll of the present invention.
FIG. 3 is a flow chart of setting the network solution of the doll of the present invention.
FIG. 4 is a flow chart of another setting the network solution of doll of the present invention.
FIG. 5 is a flow chart of further setting the network solution of the doll of the present invention.
FIG. 6 is a flow chart of a method for operating the interactive doll of the present invention.
FIG. 7 is a block diagram of a device for controlling the doll with APP of the present invention.
FIG. 8 is a block diagram of structure of the doll of the present invention.
FIG. 9 is a block diagram of a device for operating the interactive doll of the present invention.
FIG. 10 is a block diagram of an interactive application of the present invention.
FIG. 11 is a block diagram of another device for controlling the doll with APP and operating the interactive doll of the present invention.

### DETAILED DESCRIPTION OF THE PREFERRED EMBODIMENTS

Hereinafter, embodiments of the present invention will be described in detail with reference to the accompanying drawings so that those skilled in the art to which the present invention pertains can realize the present invention. As those skilled in the art would realize, the described embodiments may be modified in various different ways, all without departing from the spirit or scope of the present invention.

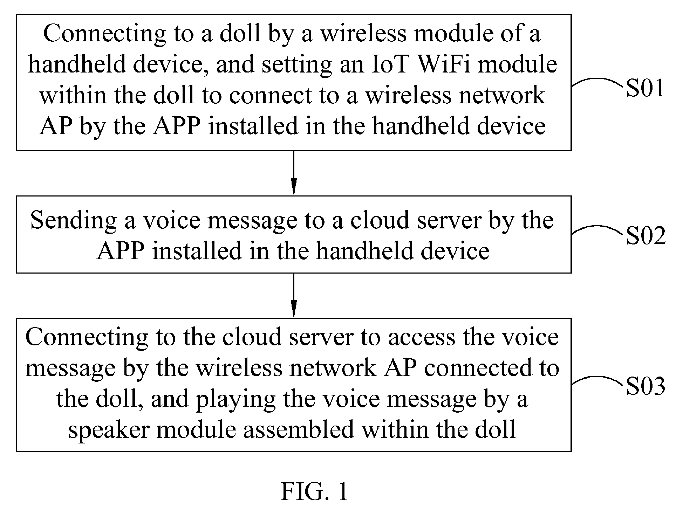

Please refer to FIG. 1 which is a flow chart of a method for controlling the doll with APP of the present invention. In the figure, the method comprises the following steps: S01: connecting to a doll by a wireless network module of a handheld device, and setting an IoT WiFi module within the doll to connect to a wireless network AP by the APP installed in the handheld device; S02: sending a voice message to a cloud server by the APP installed in the handheld device; and S03: connecting to the cloud server to access the voice message by the wireless network AP connected to the doll, and playing the voice message by a speaker module assembled within the doll. Wherein, the handheld device can be a smartphone or tablet PC which is able to connect to network by the built-in wireless network module, such as WiFi, 3G, LTE and so on, and on-line downloading the APP of controlling the doll and installing in the handheld device. The APP assists the handheld device in connecting with the doll and setting the IoT WiFi module within the doll to connect to the home-use wireless network AP, and when the setting is completed, the user can record voice message and send it to the cloud server via the APP, and the doll accesses the voice message via the cloud server by connecting to the wireless network AP and plays the voice message by the speaker assembled within the doll. Here, the IoT WiFi means that in Internet environment, general physical objects or equipment can be marked via electronic digital label or addressed so that the physical objects are able to communicate or connect with each other; that is, through this IoT WiFi module, the user can search for a specific object location or to connect and control thereto. The detailed connecting methods between the IoT WiFi module within the doll and the wireless network AP are explained in the following embodiment.

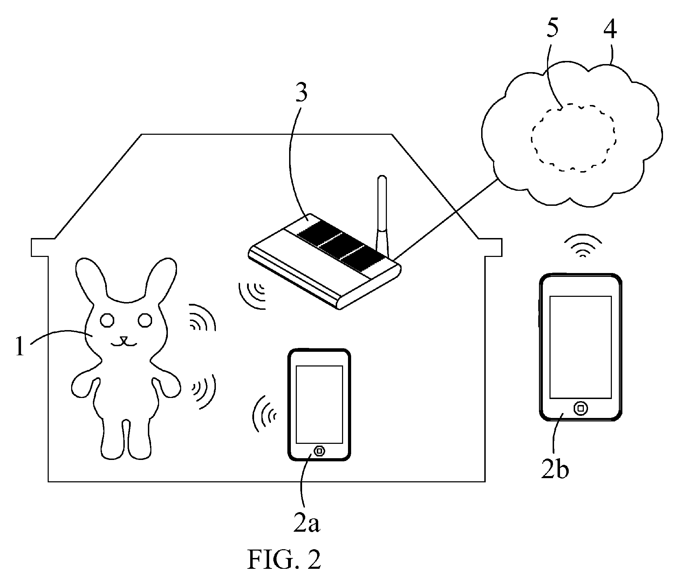

Please refer to FIG. 2 which is a schematic diagram of a method for controlling the doll with APP and operating the interactive doll of the present invention. User uses a cell phone 2a to download the APP and conducts setting to the doll 1 after the APP isinstalled, enabling connecting to home-use wireless network router 3, and after the setting is done, wherever the user is, as long as connection to internet is available , voice messages can be recorded by APP of the cell phone 2b and sends the voice messages to the cloud server 4 for storing via the internet, and the doll 1 accesses the voice messages from the cloud server 4 via the home-use wireless network router 3, and finally plays the messages by the speaker assembled in the doll 1.

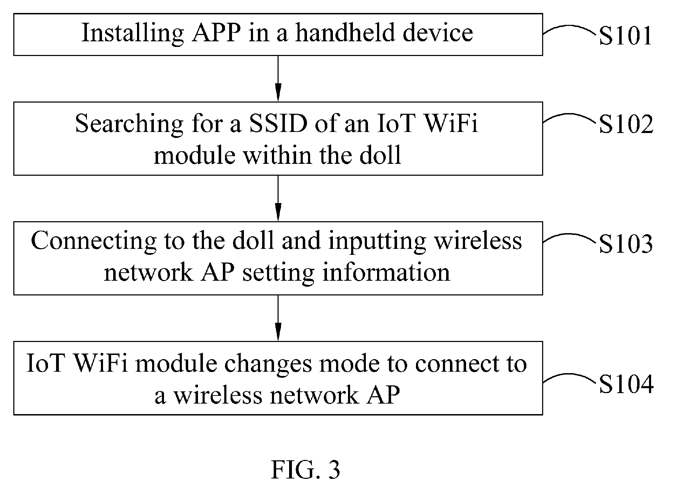

FIG. 3 to FIG. 5 are to describe the method of setting the network solution of IoT WiFi module within the doll by APP installed in a handheld device which illustrate steps for simplifying the setting when children get the doll and thereby modifying the setting to be controlled by the APP installed in the handheld device. The operation method will be described as follows.

Please refer to FIG. 3 which is a flow chart of setting the network solution of the doll of the present invention. As the figure shows that the setting for connecting to the doll comprises steps: S101: installing APP in a handheld device; S102: searching for a service set identifier (SSID) of an IoT WiFi module within the doll; S103: connecting to the doll and inputting wireless network AP setting information and S104: the IoT WiFi module changes mode to connect to a wireless network AP. Wherein, the factory setting of the doll is set as AP mode and is implemented with specific SSID and password, and when the APP is installed in the handheld device, the APP starts searching for the specific SSID based on the doll's serial number and the built-in password of the doll connects with the IoT WiFi module within the doll, at this moment of the time, inputting the SSID and password of home-use wireless network AP and sending to the doll by the APP, and then turning the doll into Client mode after restarting, conducting searching and connecting by the inputted wireless network AP setting information and when the connection is completed, the user's handheld device shows the doll and the follow-up can be conducted. If the connection is not completed when exceeding a predetermined time, the possible reason of connection failure is shown on the display screen of the APP.

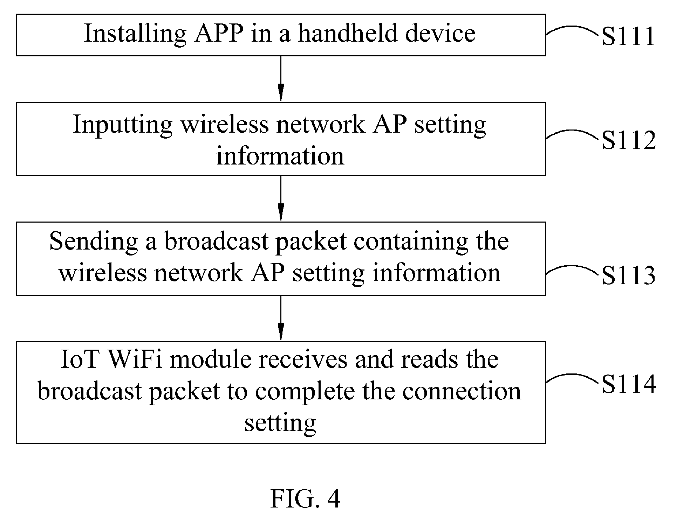

Please refer to FIG. 4 which is a flow chart of another setting the network solution of doll of the present invention. As the figure shows that the setting for connecting to the doll comprises steps: S111: installing APP in a handheld device; S 112: inputting wireless network AP setting information; S113: sending a broadcast packet containing the wireless network AP setting information and S114: an IoT WiFi module receives and reads the broadcast packet to complete the connection setting. Wherein, the factory setting of the doll is set as Client mode. When the APP is installed in the handheld device, the APP instantly requests for inputting the SSID and password of home-use wireless network AP and when the request is satisfied, the APP sends out the broadcast packet containing the wireless network AP setting information and the broadcast packet is special coding which can only read by the IoT WiFi module within the doll, and when the IoT WiFi module within the doll receives the broadcast packet, the connection setting is conducted based on the contained wireless network AP setting information. When the connection is completed, the user's handheld device shows the doll and the follow-up can be conducted. If the connection is not completed when exceeding a predetermined time, the possible reason of connection failure is shown on the display screen of the APP.

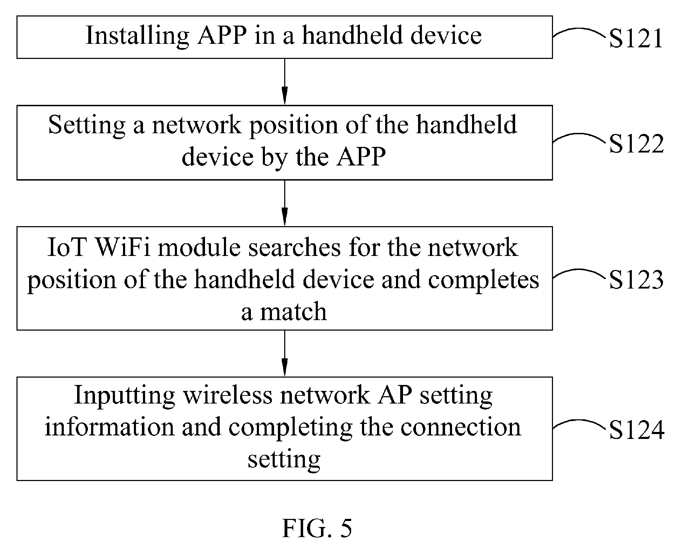

Please refer to FIG. 5 which is a flow chart of further setting the network solution of the doll of the present invention. In thefigure, the setting step comprises: S121: installing APP in a handheld device; S122: setting a network position of the handheld device by the APP; S123: the IoT WiFi module searches for the network position of the handheld device and completes a match and S124: inputting wireless network AP setting information and completing the connection setting. Wherein, the factory setting of the doll is set as Client mode and is implemented with specific connection information, and when the APP is installed in the handheld device, the APP will automatically set a SSID of the handheld device, the SSID corresponds with the connection information of the doll, the IoT WiFi module within the doll searches for the corresponding SSID to conduct matching connection to the handheld device, and the APP inputs the SSID and password information of home-use wireless network AP and sends to the doll, and then the doll conducts connecting and setting to the wireless network AP and the follow-up can be conducted. If the connection is not completed when exceeding a predetermined time, the possible reason of connection failure is shown on the display screen of the APP.

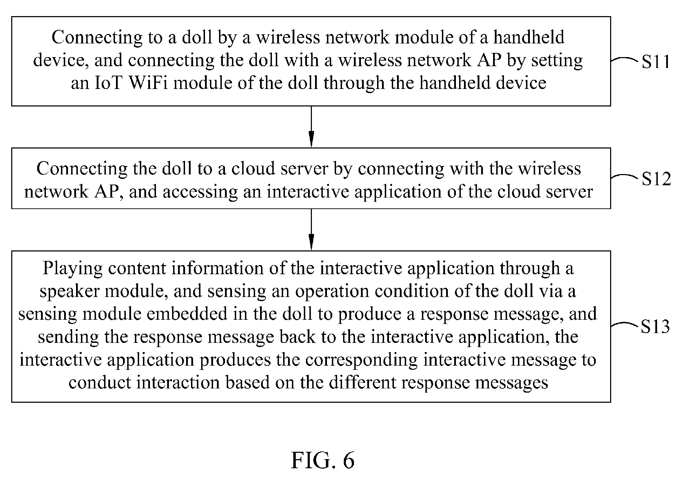

Please refer to FIG. 6 which is a flow chart of a method for operating the interactive doll of the present invention. In thefigure, the method comprises the following steps: S11: connecting to a doll by a wireless network module of a handheld device, and connecting the doll with a wireless network AP by setting an IoT WiFi module of the doll through the handheld device; S12: connecting the doll to a cloud server by connecting with the wireless network AP, and accessing an interactive application of the cloud server, and S13: playing content information of the interactive application through a speaker module, and sensing an operation condition of the doll via a sensing module embedded in the doll to produce a response message, and sending the response message back to the interactive application, the interactive application produces the corresponding interactive message to conduct interaction based on the different response messages. Wherein, the handheld device is a smartphone or a tablet which is able to set the IoT WiFi module of the doll by the handheld device through the built-in wireless module of the device such as WiFi, Bluetooth and so on to connect with the home-use wireless network AP, and by using electrical digital tag to indicate or position to enable the doll connecting with the internet; namely, it can connect with the cloud server by connecting with the wireless network AP. The cloud server comprises various interactive applications, including education learning application, game application or diverse on-line service applications, and the user uses the operation button of the doll to turn on these interactive applications, and by the setting of the operation button or all the sensor of the doll to sense the movement of the doll to execute the interactive applications selectively and to play the contents of the applications by the speaker embedded in the doll; when executing these interactive applications, regarding the necessary response, it can use the sensor to detect the operation movement of the doll made by the user, and sending the detected information served as response of cooperating with the interactive application to the application, and when the response message is received, the interactive application produces different results corresponding to diverse responses, of which is played by the doll to the end of the interactive application. The detail interactive operation will be explained in the follow-up embodiment.

Please refer to FIG. 2 again which is a schematic diagram of a method for controlling the doll with APP and operating the interactive doll of the present invention. The user uses wireless network of a cell 2a to connect with the doll 1, and to set the IoT WiFi module of the doll 1 to enable it connecting with the home-use wireless network router 3; when the setting is completed, the doll 1 is instantly able to connect to the internet via the wireless network router 3 and thereby connect to the cloud server 4. The cloud server 4 comprises various interactive applications 5, the doll 1 accesses and executes the interactive applications 5 through connecting to the internet, and plays that by the doll 1 itself, and effect of interaction can therefore be accomplished by the doll 1 when executing the response contents.

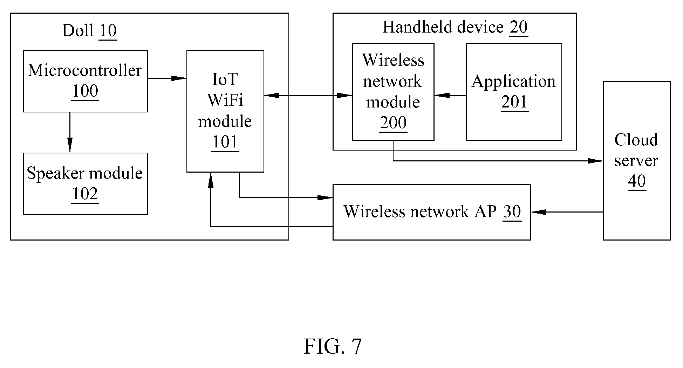

Please refer to FIG. 7 which is a block diagram of a device for controlling the doll with APP of the present invention. In thefigure, a device for controlling the doll with the APP comprises a doll 10, a handheld device 20, a wireless network AP 30 and a cloud server 40. Wherein, a microcontroller 100 is comprised within the doll 10, and the microcontroller 100 comprises an IoT WiFi module 101 and a speaker module 102 which are connected to the microcontroller 100, respectively; the handheld device 20 comprises a wireless network module 200 and an installing APP 201 , and user can set the IoT WiFi module 101 within the doll 10 connecting to the wireless network AP 30 by the APP 201; when the connection is completed, the user uses the APP 201 installed in the handheld device 20 to record or select audio file, and uploads the file to the cloud server 40 provided by the manufacturer, in the meanwhile, as the doll 10 has been set to connect to the wireless network AP 30, so the uploaded audio file can be received by connecting to the cloud server 40 and the voice message can be played by the speaker module 102.

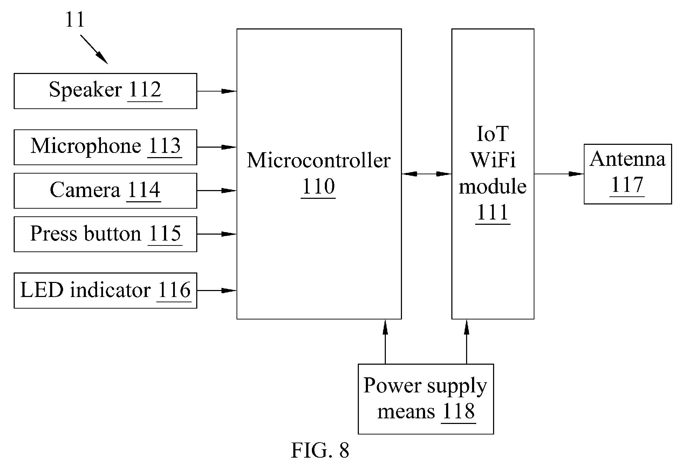

Please refer to FIG. 8 which is a block diagram of structure of the doll of the present invention. As the figure shows, the internal structure of the doll mainly comprises the microcontroller 110 and the IoT WiFi module 111, the IoT WiFi module 111 and the microcontroller 110 connect with each other by SDIO, and a power supply means 118 provides power, the power supply means 118 comprises 4 AA batteries and the IoT WiFi module 111 comprises an antenna 117. In addition, the microcontroller 110 connects to the speaker 112, a microphone 113 and a camera 114 by USB which are served as a speaker module, a recording module and a camera module of the doll 11, respectively. Wherein, the speaker is used as a device for outputting sound of the doll 11, and the microphone 113 and the camera 114 are used as devices for recording response message or picturing photo to respond to the received message. And the operating interface has a press button 115 and LED indicator 116 connecting to the microcontroller 100, the LED indicator 116 flashes to notify the user aside the doll 11 when receiving the message from the cloud server, and the user can play the received voice message by pressing button 115 and if there is no new message, the light signal goes out, at the time, the previous received message can still be played by pressing the button 115. In order to simplify the operation interface, the button 115 and the LED indicator 116 are arranged in the same position.

For the sake of cooperating with the whole design of micro-electro mechanical system, the microcontroller 110 of the doll 11 is more power-saving than conventional processor and cooperates with various power-saving mechanisms, such as the microcontroller 110 which can set the wakeup time of the IoT WiFi module 111 without connecting to wireless network AP at all times and can save power by over 80%; or the speaker 112 can be set in turn-off mode till the user presses the button 115 to play message, so that the power that the whole configuration needs can be lowered to least. Four AA batteries can supply the doll 11 for sufficient electric quantity for long time use and as the doll 11 is one of toys aside children, so power-saving and without replacing battery frequently are of crucial considerations.

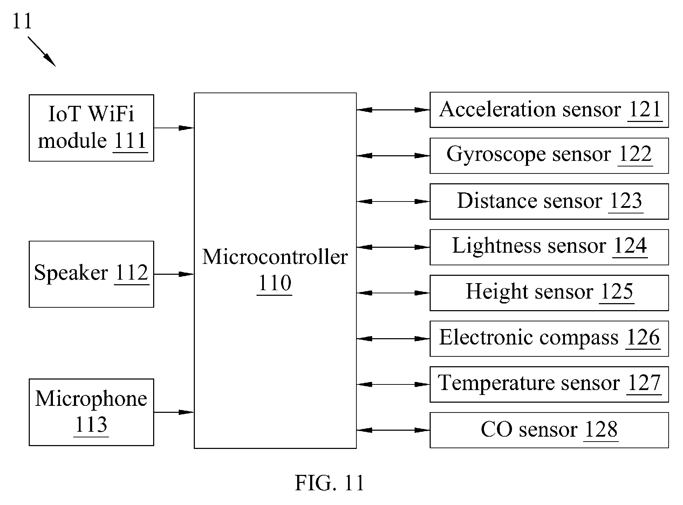

Furthermore, please refer to FIG. 11 which is a block diagram of another device for controlling the doll with APP and operating the interactive doll of the present invention. As the figure shows, the doll 11 comprises the microcontroller 120, other than the preceding connection module, outputting module and power supply module; it can connect to an acceleration sensor 121, a gyroscope sensor 122, a distance sensor123, a lightness sensor 124, a height sensor 125 and an electronic compass 126. Wherein, the acceleration sensor is used to detect the motion condition of the doll 11, and if the doll 11 held to move the acceleration sensor 121, the microcontroller 120 turns on the speaker to play voice message automatically without pressing play button; and if the doll 11 does not move in a long time, a longer wakeup time can be set to further save power. The gyroscope sensor 122 cooperates with the acceleration sensor 121 to detect the usage state of the doll 11, for example, if the doll 11 has a specific movement, it plays a prerecorded sound or the sound can be functioned as alarm clock and rotating the doll 12 by a predetermined times to disable the alarm clock function. Besides, the distance sensor 123, the lightness sensor 124 and the height sensor 125 all cooperate with the usage state of the doll 11. When the user is detected aside the doll 11, if the doll 11 is not touched, the additional power-saving mechanism will not turn on; if in sleeping time, the lightness sensor 124 detects that the lightness is lower, the received voice message will not play automatically. When the height sensor 125 detects that the doll 11 is in different heights, such as rooms in different floors, different play function can thereby be set. In addition, the doll 11 can further comprise the electronic compass 126 to cooperate with a positioning system and according to the current position of the doll 11 to decide delivering message content or playing mode. The aforementioned added sensing devices integrate the various functions into the structure of the doll by micro-electro mechanical system or element so that the user will have better experience while operating the doll.

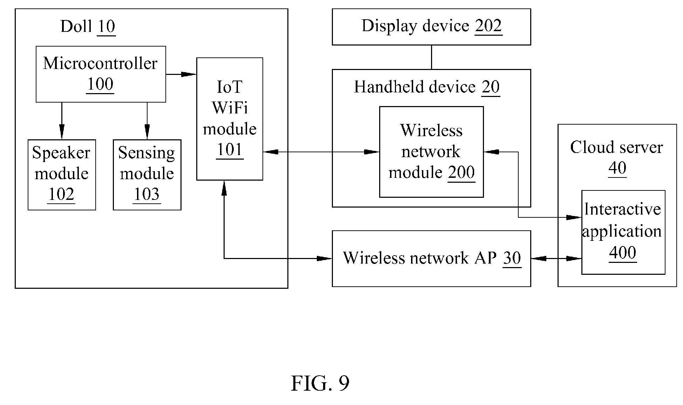

Please refer to FIG. 9 which is a block diagram of structure of a device for operating the interactive doll of the present invention. As the FIG. shows, the doll 10 comprises a microcontroller 100, and the microcontroller 100 respectively controls the IoT WiFi module 101 which is connected with the microcontroller 100, a speaker module 102 and a sensing module 103. The handheld device 20 comprises a wireless network module 200, and the IoT WiFi module 101 of the doll 10 is set to connect with a wireless network AP 30 through the wireless network module 200; when the connection is completed, the doll 10 is instantly able to connect to the cloud server 40 provided by the manufacturer through the wireless network AP 30, and the cloud server 40 comprises various interactive applications 400, the user can choose the necessary interactive applications 400 through operating the doll 10 and play it through the speaker module 102 of the doll 10; the speaker module 102 is disposed in the doll (i.e. loudspeaker), when the interactive applications needs to make a choice or response, the sensing module 103 senses the movement of the doll 10 made by the user such as rotation, rocking and so on to send the information corresponding to the motions back to the interactive applications 400, and the interactive applications 400 determine the received information to produce the corresponding results, and then send it back to the doll 10 to continue the next step.

In this movement, although the doll 10 does not have input devices such as touch pad or keyboard embedded in cell or laptop, complicated input interface is not necessary towards certain interactive applications 400 such as education learning application; only by simple operations, choice and confirmation of the interactive applications can be accomplished. However, for the sake of upgrading the function of the interactive applications 400, it can download the related interactive applications 400 through connecting the handheld device 20 with the cloud server 40, and display the contents on a display device 202 by a screen; here, the display device 202 can be the original screen of the handheld device such as cell or tablet, or it can be displayed by connecting to a television via Miracast connection. The doll 10 can only play audios, but through the characters, pictures shown on the display device 202, the effect of the interactive applications 400 can therefore promoted. In addition, the handheld device 20 is also installed with application which changes the way of underlayer receiving; in the meanwhile, using wireless connection methods of WiFi and Bluetooth and so on to connect with the doll 10 to receive the response message of the motions detected by the sensing module 103 of the doll 10 to replace the original motions detected by the original sensing devices such as the gyroscope and acceleration sensor; that is to say, by using the motions of the doll 10 to operate the handheld device 20, the applications which can be executed by the normal handheld device 20 all can be controlled by the doll 10; for example, some game applications may become more interesting via the operation of the doll 10.

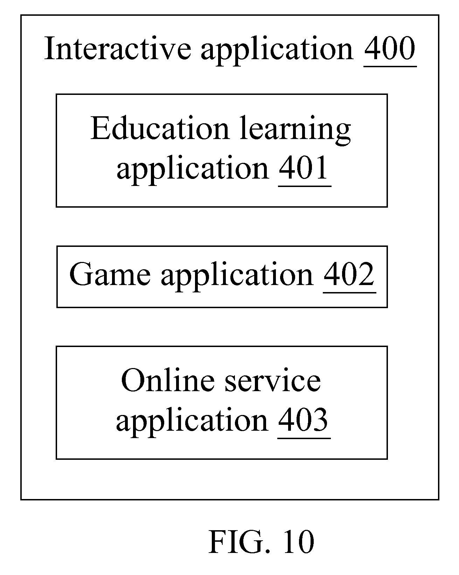

Please refer to FIG. 10 which is a block diagram of an interactive application of the present invention. As the figure shows, the interactive application 400 comprises an education learning application 401, a game application 402 and an online service application 403. Wherein, the education learning application 401 comprises various contents of language learning, science knowledge, math calculation and so on; in terms of language learning, the younger children can use the applications containing word recognition, spelling, pronunciation and so on, and as to those older children, they can use the applications containing vocabulary, grammar, listening or various applications for foreign language learning, so that the children who like to stay at home playing with dolls can therefore learn diverse foreign languages. As to the game application 402, it is the favorite towards children, regardless of puzzle games, logic infer, action games..., they can be accessed via the cloud server; in addition, most of game applications 402 are characterized of connecting with a display to be shown so as to reach to a better effect, the doll can therefore replace the functions of the operating devices of the normal mouse or joy-sticker and so on to enable the user playing games through the doll. Moreover, regarding the online service application 403, it comprises online audiobooks, online broadcast, weather report and so on, and by using the online service applications 403 provided by the cloud server, of which is played by the doll, the contents of the online service can be updated in the cloud, and the message played by the doll obtained by the user can thereby be updated so that the constant recorded audios can't be played repeatedly.

Please refer to FIG. 11 again which is a block diagram of another device for controlling the doll with APP and operating the interactive doll of the present invention. As the figure shows, a doll 11 comprises a microcontroller 110, and the microcontroller 110 connects with an IoT WiFi module 111, a speaker 112 and various sensing devices, wherein the IoT WiFi module 111 and the speaker 112 are similar to the aforementioned embodiment and the descriptions thereof are not repeated herein. When connecting with the interactive applications in the cloud, each sensing function of sensing device provides the diversity for operating. It can be seen through the FIG. 11 that the sensing device comprises an acceleration sensor 121, a gyroscope sensor 122, a distance sensor 123, a lightness sensor 124, a height sensor 125, an electronic compass 126, a temperature sensor 127 and a CO sensor 128; based on different designs and operations, the doll 11 can be disposed with one or more preceding sensing devices selectively, but the present invention shall not be subject to this restriction. Regarding the aforementioned sensing devices, the acceleration sensor 121 and the gyroscope sensor 122 are the most used types. When the doll 11 plays the interactive applications, for example, listening the online broadcasting, the doll 11 itself is lacking in operating interfaces of selected, volume-adjusting, but if the doll 11 is embedded with the acceleration sensor 121 and the gyroscope sensor 122, when the doll 11 is connected with the cloud server to play online broadcasting, setting the acceleration sensor 121 to select next channel when detecting the user is shaking the doll 11, and using the gyroscope sensor 122 to adjust the volume when the user is rotating the doll 11; consequently, the doll becomes a simple operation platform.

Besides, the distance sensor 123 and the lightness sensor 124 are able to detect the distance between the user and the doll 11 or the operating condition. When the user is away from the doll 11 by a certain distance or the lightness changes as turning off the light, the microcontroller 110 instantly turns off the application or lowers the broadcasting volume so that the doll 11 saves power. Furthermore, the height sensor 125 and the electronic compass 126 aim to detect or position the location of the doll 11; as children may move here and there with the doll 11, the doll 11 can automatically turn on the education learning application when entering into a study room or turning on the game application when entering into living room or game room through the detected position. Moreover, when selecting certain weather report applications, the doll 11 can also measure the temperature condition by the temperature sensor 127, and provide various advices for dressing according to the diverse temperature compartments; as to the CO sensor 128, it is mainly used as an alarm device for prevention. When parents are away, provided that CO concentration is over the standard value, the application is automatically turned on to report to prevent the accidents.

Regarding the aforementioned sensing devices, the acceleration sensor 121 and the gyroscope sensor 122 are used most frequently. Because the change of position or direction of the doll belongs to the most seen operating motions of the doll made by the user, using the acceleration sensor 121 and the gyroscope sensor 122 can operate the interactive application easily and directly. For example, if certain game applications are connected to a display to be shown, the user can play these games more interestingly through the motion of the doll cooperating with the shown screens. For example, ball games. The doll combined with the sensing device can be used to play ball games such as throw-and-catch. The acceleration sensor 121 and the gyroscopic detector 122 can be used to sense the motion track to simulate the ball movements of game program, or the distance detector 123 can further be combined to detect the distance between the doll and the user to verify the throw-and-catch motion track. The data collected by these sensing devices can be processed in the microcontroller 110 and can also be transmitted to the connected smart device to perform calculations, and finally, it is transformed into motions in the interactive application to experience the ball game. Compared with the sensing joystick of the conventional game console, the preceding operation enables the interactive application becoming more interesting, and the damage resulted from falling when playing throw-and-catch can be avoided as well.

Furthermore, the doll 11 is disposed with a microphone 113 used for reception which is served as a record module of the doll 11, and apart from detecting the motions of the doll, the user can input an audio which is served as the response to the application via the microphone 113 and send it back to the interactive application, and through identifying the meaning represented by the audio, the corresponding result is thereby produced. For example, the doll 11 is able to connect with a message application of the cloud to access to parents' message, and similarly, recording the response message and sending it back to the message application to deliver something which is not able to be spoken in person so as to increase the communication and interaction between each other.

While the means of specific embodiments in present invention has been described by reference drawings, numerous modifications and variations could be made thereto by those skilled in the art without departing from the scope of the invention set forth in the claims. The modifications and variations should in a range limited by the specification of the present invention.

## Claims

1. A method for controlling a doll with an application (APP) (201) , comprising:
connecting to a doll (1, 10, 11) by a wireless network module (200) of a handheld device (2a, 2b, 20), and setting, by the APP (201) installed in the handheld device (2a, 2b, 20), an Internet of Things (IoT) WiFi module (101, 111) assembled in the doll (1, 10, 11) to connect to a wireless network access point (AP) (3, 30) ;
sending a voice message to a cloud server (4, 40) by the APP (201) of the handheld device (2a, 2b, 20); and
connecting to the cloud server (4, 40) to access the voice message by the wireless network AP (3, 30) connected to the doll (1, 10, 11), and playing the voice message by a speaker module (102) assembled within the doll (1, 10, 11).

2. The method of claim 1, wherein the handheld device (2a, 2b, 20) searches and accordingly connects to the doll (1, 10, 11) by a service set identifier (SSID) and a password provided by the APP (201).

3. The method of claim 1 or 2, wherein the handheld device (2a, 2b, 20) comprises a broadcast packet of the wireless network AP setting information, and the doll (1, 10, 11) receives and accordingly reads the broadcast packet so as to complete the setting of connecting with the wireless network AP (3, 30).

4. The method of any of claims 1 to 3, wherein the APP (201) sets a service set identifier (SSID) and a password of the handheld device (2a, 2b, 20) to provide the IoT WiFi module (101, 111) of the doll (1, 10, 11) for a match and to connect to the handheld device (2a, 2b, 20).

5. The method of any of claims 1 to 4, wherein the doll (1, 10, 11) controls the speaker module (102) to play the voice message by a press button (115).

6. The method of any of claims 1 to 5, wherein the doll (1, 10, 11) detects a motion condition of the doll (1, 10, 11) by an acceleration sensor (121), and the voice message is set to play automatically by the APP (201) when the motion condition is detected.

7. The method of any of claims 1 to 6, further comprising:
recording a response message by a recording module assembled within the doll (1, 10, 11), and the response message being sent back to the cloud server (4, 40) via the wireless network AP (3, 30).

8. The method of any of claims 1 to 7, further comprising:
shooting an image by a camera module assembled within the doll (1, 10, 11) and sending the image to the cloud server (4, 40) via the wireless network AP (3, 30).

9. A method for operating an interactive doll, comprising:
connecting to a doll (1, 10, 11) by a wireless network module (200) of a handheld device (2a, 2b, 20), and setting an Internet of Things (IoT) WiFi module (101, 111) assembled in the doll (1, 10, 11) by the handheld device (2a, 2b, 20) to enable the doll (1, 10, 11) connecting to a wireless network access point (AP) (3, 30);
connecting the doll (1, 10, 11) to a cloud server (4, 40) by connecting to the wireless network AP (3, 30) to access an interactive application (5, 400) of the cloud server (4, 40); and
playing a content message of the interactive application (5, 400) by a speaker module (102) assembled within the doll (1, 10, 11), and detecting operating state of the doll (1, 10, 11) by a sensing module (103) assembled within the doll (1, 10, 11) to generate a response message, sending the response message back to the interactive application (5, 400), and the interactive application (5, 400) generating a corresponding interactive message to conduct interacting according to the different response messages.

10. The method of claim 9, wherein the sensing module (103) assembled within the doll (1, 10, 11) detects changes of position and direction of the doll (1, 10, 11) by an acceleration sensor (121) and a gyroscope sensor (122) that leads operation action of the changes of position and direction of the doll (1, 10, 11) transforming into the response message and being sent back to the interactive application (5, 400).

11. The method of claim 9 or 10, further recording a response voice message by a recording module assembled within the doll (1, 10, 11), the response voice message being sent back to the interactive application (5, 400), and the interactive application (5, 400) recognizing the response message represented as the response message to generate the corresponding interactive message to conduct interacting.

12. The method of any of claims 9 to 11, further connecting to the cloud server (4, 40) and downloading the interactive application (5, 400) by the handheld device (2a, 2b, 20), a voice message being sent to the doll (1, 10, 11) by the handheld device (2a, 2b, 20), and the doll (1, 10, 11) playing the voice message by the speaker module (102) according to setting of the operating state.

13. The method of any of claims 9 to 12, further connecting to the cloud server (4, 40) and downloading the interactive application (5, 400) by the handheld device (2a, 2b, 20), and the interactive application (5, 400) displaying an interactive picture of the interactive application (5, 400) by the handheld device (2a, 2b, 20) or a display device (202) connected to the handheld device (2a, 2b, 20).

14. The method of any of claims 9 to 13, further connecting to the doll (1, 10, 11) by the wireless network module (200) of the handheld device (2a, 2b, 20), receiving the response message and replacing a sensing message detected by the original sensing device of the handheld device (2a, 2b, 20), and manipulating an application (201) installed within the handheld device (2a, 2b, 20) by the doll (1, 10, 11).

15. A device for controlling and operating a doll, comprising:
a doll (1, 10, 11) having a microcontroller (100, 110) comprising an Internet of Things (IoT) WiFi module (101, 111), a speaker module (102) and a sensing module (103) connected to the microcontroller (100, 110), respectively; and
a handheld device (2a, 2b, 20) comprising a wireless network module (200) and having an application (201) installed therein to set the IoT WiFi module (101, 111) of the doll (1, 10, 11) connecting to a wireless network access point (AP) (3, 30);
wherein, the handheld device (2a, 2b, 20) sends a voice message to a cloud server (4, 40) by the application (201), and the doll (1, 10, 11) accesses the voice message by a connection between the wireless network AP (3, 30) and the cloud server (4, 40), and plays the voice message by the speaker module (102).

16. The device of claim 15, wherein the doll (1, 10, 11) comprises an indicator connected to the microcontroller (100, 110), and used as a reminder while receiving a new message.

17. The device of claim 15 or 16, wherein the doll (1, 10, 11) comprises a recording module connected to the microcontroller (100, 110), used to record a response message and sent back to the cloud server (4, 40).

18. The device of any of claims 15 to 17, wherein the cloud server (4, 40) further comprises an interactive application (5, 400), the doll (1, 10, 11) accesses the interactive application (5, 400) by a connection between the wireless network AP (3, 30) and the cloud server (4, 40); wherein the doll (1, 10, 11) plays a content message of the interactive application (5, 400) by the speaker module (102), and generates a response message by operating state detected by the sensing module (103) and accordingly sends back to the interactive application (5, 400) so that the interactive application (5, 400) generates a corresponding interactive message to conduct interacting.

19. The device of claim 18, wherein the sensing module (103) comprises an acceleration sensor (121) and a gyroscope sensor (122) detecting changes of position and direction of the doll (1, 10, 11) that leads operation action of the changes of position and direction of the doll (1, 10, 11) transforming into the response message and being sent back to the interactive application (5, 400).

20. The device of claim 18 or 19, further comprising a display device (202) connected to the handheld device (2a, 2b, 20) and displaying an interactive picture of the interactive application (5, 400).

## Patentansprüche

1. Verfahren zum Steuern einer Puppe durch eine Anwendung (APP) (201), mit den Schritten:
Herstellen einer Verbindung mit einer Puppe (1, 10, 11) durch ein Drahtlosnetzwerkmodul eines Handheld-Geräts (2a, 2b, 20) und Einstellen eines in der Puppe (1, 10, 11) installierten IdD- (Internet der Dinge) WiFi-Moduls durch die im Handheld-Gerät (2a, 2b, 20) installierte APP (201) zum Herstellen einer Verbindung mit einem Drahtlosnetzwerk-Zugangspunkt (3, 30);
Übertragen einer Sprachnachricht an einen Cloud-Server (4, 40) durch die APP (201) des Handheld-Geräts (2a, 2b, 20); und
Herstellen einer Verbindung mit dem Cloud-Server (4, 40) zum Zugreifen auf die Sprachnachricht über den mit der Puppe (1, 10, 11) verbundenen Drahtlosnetzwerk-Zugangspunkt (3, 30), und Wiedergeben der Sprachnachricht durch ein in der Puppe (1, 10, 11) installiertes Lautsprechermodul (102).

2. Verfahren nach Anspruch 1, wobei das Handheld-Gerät (2a, 2b, 20) unter Verwendung einer SSID (Service Set Identifier) und eines Passworts, die von der APP bereitgestellt werden, die Puppe (1, 10, 11) sucht und eine entsprechende Verbindung mit der Puppe herstellt.

3. Verfahren nach Anspruch 1 oder 2, wobei das Handheld-Gerät (2a, 2b, 20) ein Broadcast-Paket der Verbindungseinrichtungsinformation des Drahtlosnetzwerk-Zugangspunkts aufweist, und wobei die Puppe (1, 10, 11) das Broadcast-Paket empfängt und entsprechend liest, um die Einrichtung der Verbindung mit dem Drahtlosnetzwerk-Zugangspunkt abzuschließen.

4. Verfahren nach einem der Ansprüche 1 bis 3, wobei die APP (201) eine SSID (Service Set Identifier) und ein Passwort des Handheld-Geräts (2a, 2b, 20) setzt, um das IdD-WiFi-Modul (101, 111) der Puppe (1, 10, 11) entsprechend mit dem Handheld-Gerät (2a, 2b, 20) zu verbinden.

5. Verfahren nach einem der Ansprüche 1 bis 4, wobei die Puppe (1, 10, 11) das Lautsprechermodul (102) steuert, um die Sprachnachricht durch Betätigen eines Druckknopfs wiederzugeben.

6. Verfahren nach einem der Ansprüche 1 bis 5, wobei die Puppe (1, 10, 11) einen Bewegungszustand der Puppe (1, 10, 11) durch einen Beschleunigungssensor (121) erfasst, und wobei die Sprachnachricht derart eingestellt ist, dass sie durch die APP (201) automatisch wiedergegeben wird, wenn der Bewegungszustand erfasst wird.

7. Verfahren nach einem der Ansprüche 1 bis 6, ferner mit dem Aufzeichnen einer Antwortnachricht durch ein in der Puppe (1, 10, 11) installiertes Aufzeichnungsmodul, wobei die Antwortnachricht über den Drahtlosnetzwerk-Zugangspunkt (3, 30) an den Cloud-Server (4, 40) zurückübertragen wird.

8. Verfahren nach einem der Ansprüche 1 bis 7, ferner mit dem Aufnehmen eines Bildes durch ein in der Puppe (1, 10, 11) installiertes Kameramodul und Übertragen des Bildes über den Drahtlosnetzwerk-Zugangspunkt (3, 30) an den Cloud-Server (4, 40).

9. Verfahren zum Betreiben einer interaktiven Puppe, mit den Schritten:
Herstellen einer Verbindung mit einer Puppe (1, 10, 11) durch ein Drahtlosnetzwerkmodul (200) eines Handheld-Geräts (2a, 2b, 20) und Einstellen eines in der Puppe (1, 10, 11) installierten IdD- (Internet der Dinge) WiFi-Moduls (101, 111) durch das Handheld-Gerät (2a, 2b, 20), um zu ermöglichen, dass die Puppe (1, 19, 11) eine Verbindung mit einem Drahtlosnetzwerk-Zugangspunkt (3, 30) herstellt;
Verbinden der Puppe (1, 10, 11) mit einem Cloud-Server (4, 40) durch Herstellen einer Verbindung mit dem Drahtlosnetzwerk-Zugangspunkt (3, 30) für einen Zugriff auf eine interaktive Anwendung (5, 400) des Cloud-Servers (4, 40); und
Wiedergeben eines Nachrichteninhalts der interaktiven Anwendung (5, 400) durch ein in der Puppe (1, 10, 11) installiertes Lautsprechermodul (102) und Erfassen eines Betriebszustands der Puppe (1, 10, 11) durch ein in der Puppe (1, 10, 11) installiertes Sensormodul (103), um eine Antwortnachricht zu erzeugen, Zurückübertragen der Antwortnachricht an die interaktive Anwendung (5, 400), woraufhin die interaktive Anwendung (5, 400) eine entsprechende interaktive Nachricht erzeugt, um eine Interaktion gemäß verschiedenen Antwortnachrichten auszuführen.

10. Verfahren nach Anspruch 9, wobei das in der Puppe (1, 10, 11) installierte Sensormodul (103) Änderungen der Position und der Richtung der Puppe (1, 10, 11) durch einen Beschleunigungssensor (121) und einen Gyroskopsensor (122) erfasst, um Aktionen, die zu Änderungen der Position und der Richtung der Puppe (1, 10, 11) führen, in die Antwortnachricht umzuwandeln, die an die interaktive Anwendung (5, 400) zurückübertragen wird.

11. Verfahren nach Anspruch 9 oder 10, ferner mit dem Aufzeichnen einer Antwortsprachnachricht durch ein in der Puppe (1, 10, 11) installiertes Aufzeichnungsmodul, wobei die Antwortsprachnachricht an die interaktive Anwendung (5, 400) zurückübertragen wird und die interaktive Anwendung den durch die Antwortnachricht dargestellten Nachrichteninhalt erkennt, um die entsprechende interaktive Nachricht zu erzeugen und eine Interaktion auszuführen.

12. Verfahren nach einem der Ansprüche 9 bis 11, ferner mit dem Herstellen einer Verbindung mit dem Cloud-Server (4, 40) und dem Herunterladen der interaktiven Anwendung (5, 400) durch das Handheld-Gerät (2a, 2b, 20), wobei eine Sprachnachricht vom Handheld-Gerät (1, 10, 11) an die Puppe (1, 10, 11) übertragen wird, und wobei die Puppe (1, 10, 11) die Sprachnachricht durch das Lautsprechermodul (102) gemäß dem eingestellten Betriebszustand wiedergibt.

13. Verfahren nach einem der Ansprüche 9 bis 12, ferner mit dem Herstellen einer Verbindung mit dem Cloud-Server (4, 40) und dem Herunterladen der interaktiven Anwendung (5, 400) durch das Handheld-Gerät (2a, 2b, 20), wobei die interaktive Anwendung (5, 400) ein interaktives Bild der interaktiven Anwendung (5, 400) durch das Handheld-Gerät (2a, 2b, 20) oder eine mit dem Handheld-Gerät (2a, 2b, 20) verbundene Displayeinrichtung (202) darstellt.

14. Verfahren nach einem der Ansprüche 9 bis 13, ferner mit dem Herstellen einer Verbindung mit der Puppe (1, 10, 11) durch das Drahtlosnetzwerkmodul (200) des Handheld-Geräts (2a, 2b, 20), Empfangen der Antwortnachricht und Ersetzen der durch das Sensormodul der Puppe (1, 10, 11) erfassten ursprünglichen Bewegungen und Manipulieren einer im Handheld-Gerät (2a, 2b, 20) installierten Anwendung (201) durch die Puppe (1, 10,11).

15. Vorrichtung zum Steuern und Betreiben einer Puppe, mit:
einer Puppe (1, 10, 11) mit einem Mikrocontroller (100, 110), der ein IdD- (Internet der Dinge) WiFi-Modul (101, 111) aufweist, einem Lautsprechermodul (102) und einem Sensormodul (103), die mit dem Mikrocontroller (100, 110) verbunden sind; und
einem Handheld-Gerät (2a, 2b, 20), das ein Drahtlosnetzwerkmodul (200) und eine im Handheld-Gerät installierte Anwendung (201) zum Einstellen des IdD-Wifi-Moduls (101, 111) der Puppe (1, 10, 11) zum Herstellen einer Verbindung mit einem Drahtlosnetzwerk-Zugangspunkt (AP) (3, 30) aufweist,
wobei das Handheld-Gerät (2a, 2b, 20) durch die Anwendung (201) eine Sprachnachricht an einen Cloud-Server (4, 40) überträgt, und wobei die Puppe (1, 10, 11) über eine Verbindung zwischen dem Drahtlosnetzwerk-Zugangspunkt (3, 30) und dem Cloud-Server (4, 40) auf die Sprachnachricht zugreift und die Sprachnachricht durch ein Lautsprechermodul (102) wiedergibt.

16. Vorrichtung nach Anspruch 15, wobei die Puppe (1, 10, 11) eine mit dem Mikrocontroller (100, 110) verbundene Anzeige aufweist, die als eine Erinnerung verwendet wird, während eine neue Nachricht empfangen wird.

17. Vorrichtung nach Anspruch 15 oder 16, wobei die Puppe (1, 10, 11) ein mit dem Mikrocontroller (100, 110) verbundenes Aufzeichnungsmodul aufweist, das verwendet wird, um eine Antwortnachricht zu erfassen, die an den Cloud-Server (4, 40) zurückübertragen wird.

18. Vorrichtung nach einem der Ansprüche 15 bis 17, wobei der Cloud-Server (4, 40) ferner eine interaktive Anwendung (5, 400) aufweist, die Puppe (1, 10, 11) durch eine Verbindung zwischen dem Drahtlosnetzwerk-Zugangspunkt (3, 30) und dem Cloud-Server (4, 40) auf die interaktive Anwendung (5, 400) zugreift, die Puppe (1, 10, 11) einen Nachrichteninhalt der interaktiven Anwendung (5, 400) durch das Lautsprechermodul (102) wiedergibt und gemäß einem durch das Sensormodul (103) erfassten Betriebszustand eine Antwortnachricht erzeugt und an die interaktive Anwendung (5, 400) zurücküberträgt, so dass die interaktive Anwendung (5, 400) eine entsprechende interaktive Nachricht erzeugt, um eine Interaktion auszuführen.

19. Vorrichtung nach Anspruch 18, wobei das Sensormodul (103) einen Beschleunigungssensor (121) und einen Gyroskopsensor (122) zum Erfassen von Änderungen der Position und der Richtung der Puppe (1, 10, 11) aufweist, wobei Operationen, die zu Änderungen der Position und der Richtung der Puppe (1, 10, 11) führen, in die Antwortnachricht umgewandelt werden, die an die interaktive Anwendung (5, 400) zurückübertragen wird.

20. Vorrichtung nach Anspruch 18 oder 19, ferner mit einer mit dem Handheld-Gerät (2a, 2b, 20) verbundenen Displayeinrichtung (202) zum Darstellen eines interaktiven Bildes der interaktiven Anwendung (5, 400).

## Revendications

1. Procédé de commande d'une poupée avec une application (APP) (201) comprenant :
la connexion à une poupée (1, 10, 11), par un module réseau sans fil (200), d'un dispositif manuel (2a, 2b, 20), et la configuration, par l'APP (201) installée dans le dispositif manuel (2a, 2b, 20), d'un module WiFi Internet des Objets (IoT) (101, 111) assemblé dans la poupée (1, 10, 11) pour se connecter à un point d'accès (AP) (3, 30) d'un réseau sans fil ;
l'envoi d'un message vocal vers un serveur dans le nuage (4, 40) par l'APP (201) du dispositif manuel (2a, 2b 20) ; et
la connexion au serveur dans le nuage (4,40) pour accéder au message vocal par l'AP (3, 30) du réseau sans fil connecté à la poupée (1, 10, 11), et la délivrance du message vocal par un module haut parleur (102) assemblé à l'intérieur de la poupée (1, 10, 11).

2. Procédé selon la revendication 1, dans lequel le dispositif manuel (2a, 2b, 20) recherche et, par conséquent, se connecte à la poupée (1, 10, 11) par un identifiant d'ensemble de services (SSID) et un mot de passe fournis par l'APP (201).

3. Procédé selon la revendication 1, ou 2, dans lequel le dispositif manuel (2a, 2b, 20) comprend un paquet de diffusion de l'information de la configuration de l'AP du réseau sans fil, et la poupée (1, 10, 11) reçoit et, par conséquent, lit le paquet de diffusion pour compléter la configuration de connexion avec l'AP (3 ; 30) du réseau sans fil.

4. Procédé selon l'une quelconque des revendications 1 à 3, dans lequel l'APP (201) établit un identifiant d'ensemble de services (SSID) et un mot de passe du dispositif manuel (2a, 2b, 20) pour mettre à disposition le module WiFi IoT (101, 111) de la poupée (1, 10, 11) pour une mise en concordance et pour se connecter au dispositif manuel (2a, 2b, 20).

5. Procédé selon l'une quelconque des revendications 1 à 4, dans lequel la poupée (1, 10, 11) contrôle le module haut parleur (102) pour délivrer le message vocal par un bouton pression (115).

6. Procédé selon l'une quelconque des revendications 1 à 5, dans lequel la poupée (1, 10, 11) détecte une situation de mouvement de la poupée (1, 10, 11) par un détecteur d'accélération (121), et le message vocal est appelé à être délivré automatiquement par l'APP (201) lorsque la situation de mouvement est détectée.

7. Procédé selon l'une quelconque des revendications 1 à 6, comprenant en outre :
l'enregistrement d'un message de réponse par un module d'enregistrement assemblé à l'intérieur de la poupée (1, 10, 11), et le message de réponse étant renvoyé vers le serveur dans le nuage (4, 40) par l'intermédiaire de l'AP (3 ; 30) du réseau sans fil.

8. Procédé selon l'une quelconque des revendications 1 à 7, comprenant en outre :
la prise d'une image par un module d'appareil photo assemblé à l'intérieur de la poupée (1, 10, 11) et l'envoi de l'image vers le serveur dans le nuage (4, 40) par l'intermédiaire de l'AP (3; 30) du réseau sans fil.

9. Procédé pour faire fonctionner une poupée interactive, comprenant :
la connexion à une poupée (1, 10, 11), par un module réseau sans fil (200), d'un dispositif manuel (2a, 2b, 20), et la configuration d'un module WiFi Internet des Objets (IoT) (101, 111) assemblé dans la poupée (1, 10, 11) par le dispositif manuel (2a, 2b, 20) pour permettre à la poupée (1, 10, 11) de se connecter à un point d'accès (AP) (3, 30) d'un réseau sans fil ;
la connexion de la poupée (1,10, 11) à un serveur dans le nuage (4,40) par la connexion au AP (3, 30) d'un réseau sans fil pour accéder à une application interactive (5, 400) du serveur dans le nuage (4, 40) ; et
la délivrance d'un message de contenu de l'application interactive (4, 400) par un module haut parleur (102) assemblé à l'intérieur de la poupée (1, 10, 11), et la détection de l'état d'exécution de la poupée '1, 10, 11) par un module de détection (103) assemblé à l'intérieur de la poupée pour générer un message de réponse,
le renvoi du message de réponse à l'application interactive (5, 400), et la génération par l'application interactive (5, 400) d'un message interactif pour conduire l'interaction selon les différents messages de la réponse.

10. Procédé selon la revendication 9, dans lequel le module de détection (103) assemblé à l'intérieur de la poupée (1, 10, 11) détecte les changements de position et de direction de la poupée (1, 10, 11) par un détecteur d'accélération (121) et un détecteur gyroscopique (122) qui conduit l'action de l'application des changements de position et de direction de la poupée (1, 10, 11) en le transformant en message de réponse et le renvoyant à l'application interactive (5, 400).

11. Procédé selon la revendication 9, ou 10, enregistrant en outre un message vocal de réponse par un module d'enregistrement assemblé à l'intérieur de la poupée (1, 10, 11), le message vocal de réponse étant renvoyé vers l'application interactive (5, 400), et l'application interactive (5, 400) reconnaissant le message de réponse représenté comme étant le message de réponse pour générer le message interactif correspondant pour conduire l'interaction.

12. Procédé selon l'une quelconque des revendications 9 à 11, se connectant en outre au serveur dans le nuage (4, 40) et chargeant l'application interactive (5, 400) par le dispositif manuel (2a, 2b, 20), un message vocal étant envoyé à la poupée (1, 10, 11) par le dispositif manuel (2a, 2b, 20), et la poupée (1, 10, 11) délivrant le message vocal par le module haut parleur (102) selon la configuration de l'état de fonctionnement.

13. Procédé selon l'une quelconque des revendications 9 à 12, se connectant en outre au serveur dans le nuage (4, 40) et chargeant l'application interactive (5, 400) par le dispositif manuel (2a, 2b, 20), et l'application interactive (5, 400) affichant une image interactive de l'application interactive (5, 400) par le dispositif manuel (2a, 2b, 20) ou un dispositif d'affichage (202) connecté au dispositif manuel (2a, 2b, 20).

14. Procédé selon l'une quelconque des revendications 9 à 13, se connectant en outre à la poupée (1, 10, 11) par le module du réseau sans fil (200) du dispositif manuel (2a, 2b, 20), recevant le message de réponse et remplaçant un message de détection détecté par le dispositif de détection original du dispositif manuel (2a, 2b, 20), et modifiant une application (201) installée à l'intérieur du dispositif manuel (2a, 2b, 20) par la poupée (1, 10, 11).

15. Dispositif pour contrôler et faire fonctionner une poupée, comprenant :
une poupée (1, 10, 11) ayant un microcontrôleur (100, 110) comprenant un module WiFi Internet des Objets (IoT) (101,111), un module haut parleur (102) et un module de détection (103) connectés au microcontrôleur (100, 110), respectivement ; et
un dispositif manuel (2a, 2b, 20) comprenant un module de réseau sans fil (200) et ayant une application (201) qui y est installée, pour configurer le module WiFi IoT (101, 111) de la poupée (1, 10, 11) se connectant à un point d'accès (AP) (3, 30) du réseau sans fil ;
où, le dispositif manuel (2a, 2b, 20) envoie un message vocal à un serveur dans le nuage (4, 40) par une application (201), et la poupée (1, 10, 11) accède au message vocal par une connexion entre l'AP (3; 30) du réseau sans fil et le serveur dans le nuage (4, 40), et délivre le message vocal par le module haut parleur (102).

16. Procédé selon la revendication 15, dans lequel la poupée (1, 10, 11) comprend un indicateur connecté au microcontrôleur (100, 110), et qui est utilisé en tant que rappel pendant la réception d'un nouveau message.

17. Procédé selon la revendication 15 ou 16, dans lequel la poupée (1, 10, 11) comprend un module d'enregistrement connecté au microcontrôleur (100, 110), utilisé pour enregistrer un message de réponse et le renvoyer vers le serveur dans le nuage (4, 40).

18. Procédé selon l'une quelconque des revendications 15 à 17, dans lequel le serveur dans le nuage (4, 40) comprend en outre une application interactive (5, 400), la poupée (1, 10, 11) accède à l'application interactive (5, 400) par une connexion entre l'AP (3, 30) du réseau sans fil et le serveur dans le nuage (4, 40) ; où la poupée (1, 10, 11) délivre un message du contenu de l'application interactive (5, 400) par le module haut parleur (102), et génère un message de réponse par l'état de fonctionnement détecté par le module de détection (103) et en conséquence le renvoie vers l'application interactive (5, 400) afin que l'application interactive (5, 400) génère un message interactif correspondant pour conduire l'interaction.

19. Dispositif selon la revendication 18, dans lequel le module de détection (103) comprend un détecteur d'accélération (121) et un détecteur gyroscopique (122) qui détectent les changements de position et de direction de la poupée (1, 10, 11) qui conduisent l'action de l'application des changements de position et de direction de la poupée (1, 10, 11) transformant le message de réponse et le renvoyant vers l'application interactive (5, 400).

20. Dispositif selon la revendication 18 ou 19, comprenant en outre un dispositif d'affichage (202) connecté au dispositif manuel (2a, 2b, 20) et affichant une image interactive de l'application interactive (5, 400).
